# EUROPÄISCHE PATENTSCHRIFT

(11) **EP 1 541 107 B1**
(45) Veröffentlichungstag und Bekanntmachung des Hinweises auf die Patenterteilung: **08.02.2012**
(21) Anmeldenummer: 04029327.6
(22) Anmeldetag: 10.12.2004
(51) Int. Cl.: A61G 3/06, B60P 1/43

(54) **Fahrzeug mit einer Rampe zum erleichterten Ein- und Ausstieg mobilitätsbehinderter Personen**
Vehicle with a ramp assembly for facilitating a disabled person to enter and exit the vehicle
Véhicule comprenant une rampe pour faciliter la montée et la descente d'une personne à mobilité réduite

(30) Priorität: 10.12.2003 DE 20319248 U
(43) Veröffentlichungstag der Anmeldung: 15.06.2005
(73) Patentinhaber: MBB Palfinger GmbH, 27777 Ganderkesee (DE)
(72) Erfinder: Wiels, Bernhard, 26135 Oldenburg (DE); Brandt, Hermann, 28259 Bremen (DE); Boch, Andreas, 26209 Hatten (DE)
(74) Vertreter: Möller, Friedrich

(56) Entgegenhaltungen:
- WO-A-98/06370
- GB-A- 2 369 344
- US-A- 5 775 232

## Beschreibung

Die Erfindung betrifft ein Fahrzeug mit einer Rampe zum erleichterten Ein- und Ausstieg mobilitätsbehinderter Personen gemäß dem Oberbegriff des Anspruchs 1.

Fahrzeuge des öffentlichen Personenverkehrs, wie Busse, Straßenbahnen, Züge oder dergleichen verfügen über mindestens eine Ein- und Ausstiegshilfe, die mobilitätsbehinderten Personen, insbesondere Rollstuhlfahrern, den Ein- und Ausstieg ermöglicht oder zumindest erleichtert. Die Ein- und Ausstiegshilfe dient dazu, einen naturgemäß vorhandenen Höhenunterschied einer Flurfläche des Fahrzeugs zum angrenzenden Gehweg, Bahnsteig oder dergleichen zu überbrücken.

Eine Art solcher Ein -und Ausstiegshilfe weist im Türbereich des Fahrzeugs eine heb- und senkbare Plattform auf. Eine andere Art einer Ein- und Ausstiegshilfe verfügt über eine ein- und ausfahrbare Rampe, die im ausgefahrenen Zustand verschwenkbar ist zur Bildung einer geneigten Fläche, die den Höhenunterschied zwischen der Flurfläche des Fahrzeugs und einem Gehweg, Bahnsteig oder Ähnliches überbrückt. Die Erfindung bezieht sich auf eine Ein- und Ausstiegshilfe der letztgenannten Art.

Aus der WO 9810ei370 A ist eine Rampe bekannt, die in einem sich im Türbereich des Fahrzeugs befindenden Ausschnitt in der Flurfläche angeordnet ist. Dazu muss bei dieser bekannter. Rampe der Lärgsholm im Türbereich entfernt werden. Um den Unterbau des Fahrzeugs infolge des im Türbereich entfernten Längsholms zu verstärken, sind die auf gegenüberliegenden Seiten des Ausschnitts liegenden Enden des Längsholms durch Querträger mit einem zur Fahrzeugmitte nach innen versetzten Längsträger des Chassis des Fahrzeugs verbunden. Der Längsträger bleibt dadurch auch im Türbereich unterbrochen, worunter die Stabilität des Fahrzeugs leidet.

Der Erfindung liegt nun die Aufgabe zugrunde, ein Fahrzeug mit einer Rampe zur Erleichterung des Ein- und Ausstiegs mobilitätsbehinderter Personen zu schaffen, wobei die Rampe stabil und platzsparend ist, insbesondere die Bodenfreiheit des Fahrzeugs nicht nennenswert beeinträchtigt.

Ein Fahrzeug zur Lösung dieser Aufgabe weist die Merkmale des Anspruchs 1 auf. Demnach ist vorgesehen, das kassettenartige Gehäuse an einer zum Längsholm weisenden außenliegenden Querkante oder einem Querrand mit einem im Querschnitt ein U-förmiges Profil aufweisenden Träger zu versehen. Das U-förmige Profil ist derart der vorderen, freien Stirnkante des kassettenartigen Gehäuses zugeordnet, dass die Unterseite dieses U-förmigen Profils offen ist. Die Abmessung des U-förmigen Profils ist so gewählt, dass in dieses von unten der Längsholm oder auch der Stützholm eingreifen kann. Dadurch ruht das U-förmige Profil an der freien Querseite des kassettenartigen Gehäuses auf dem Längsholm oder dem Stützholm. Diese Lagerung der Kassette führt zu einer niedrigen Bauhöhe, weil das U-förmige Profil den Längsholm oder den Stützholm von oben umgibt und sich dadurch nicht nennenswert über der Oberseite des Längsholms befindet. Durch diese niedrigbauende Aufhängung der freien Querkante des kassettenartigen Gehäuses auf dem Längsholm braucht dieser im Bereich der Rampe nur tiefergelegt zu sein durch eine Höhenreduzierung seines Querschnitts. Eine vollständige Entfernung des Längsholms im Bereich der Rampe ist in diesem Falle nicht erforderlich. Gleichwohl kann im Bereich der Rampe auch der Längsholm vollständig entfernt sein. Dann ruht das unten offene U-förmige Profil zur Bildung der freien vorderen Querkante des kassettenartigen Gehäuses auf dem sich unter dem Ausschnitt des Längsholms entlangerstreckenden Stützholm. Auf diese Weise wird dann ein unter allen Umständen ausreichender Raum zum Einschieben oder Einsetzen des kassettenartigen Gehäuses mit der Rampe in den Ausschnitt der Flurfläche des Fahrzeugs geschaffen.

Im Türbereich, wo sich ein zur Aufnahme der Rampe dienender Ausschnitt in der Flurfläche befindet, kann der Unterbau der Flurfläche tiefergelegt sein. Dadurch braucht die die Rampe aufweisende Ein- und Ausstiegshilfe nicht unter dem Unterbau montiert zu werden. Vielmehr kann die Ein- und Ausstiegshilfe mit der Rampe von oben in den Ausschnitt eingesetzt oder von der Türseite her in den Ausschnitt eingeschoben worden. Dadurch wird die Bodenfreiheit des Fahrzeugs nicht beeinträchtigt und es kann die Ein-und Ausstiegshilfe leichter montiert werden. Insbesondere lässt es die Erfindung zu, beliebige Ein- und Ausstiegshilfen, und zwar sowohl manuell betriebene als auch mit einem mechanischen, hydraulischen, pneumatischen oder elektrischen Antrieb der Rampe versehene Ein- und Ausstiegshilfen im Türbereich des Fahrzeugs anzuordnen.

Es ist weiterhin vorgesehen, den sich im Türbereich unter der Tür erstreckenden Abschnitt des Längsholms des Unterbaus im Bereich des Ausschnitts der Flurfläche für die Ein- und Ausstiegshilfe, insbesondere die Rampe, von oben her zum Beispiel durch einen Einschnitt in der Höhe zu reduzieren oder ganz zu entfernen. Ist der Längsholm im Bereich der Rampe ganz entfernt, wird er in diesem Bereich erforderlichenfalls durch einen Stützholm ersetzt und/oder als Rahmen um die Ein- und Ausstiegshilfe herumgeführt. Dadurch ist der Längsholm im Bereich der Tür, nämlich dort, wo sich die Rampe befindet, unterhalb der Rampe angeordnet bzw. um die Rampe herumgeführt. Die Rampe braucht dadurch nicht mehr unter dem Unterbau angeordnet zu werden, lässt sich vielmehr über den im Bereich der Rampe bzw. der Tür tieferliegenden Längsholm oder den Stützholm anordnen.

Gemäß einer Weiterbildung der Erfindung ist vorgesehen, das kassettenartige Gehäuse zur Aufnahme der Rampe von einem Rahmen zu umgeben, der einen Teil des Unterbaus bildet und hiermit verbunden ist. Der Rahmen schließt dort an den Längsholm des Unterbaus an, wo sein Querschnitt in der Höhe verringert ist oder wo der Längsholm teilweise entfernt ist. Auf diese Weise wird der im Bereich der Kassette im Querschnitt reduzierte oder ganz entfernte Querholm durch den Rahmen verbunden und somit der Längsholm um das kassettenartige Gehäuse herumgeführt. Die Querschnittsverringerung oder teilweise Entfernung des Längsholms führt dadurch zu keiner nennenswerten Schwächung des Unterbaus.

Wenn der Längsholm mittels des Rahmens um das kassettenartige Gehäuse herumgeführt ist, umgibt dieser Rahmen die parallelen Längsseiten und die hinten liegende Querseite des Gehäuses. Üblicherweise bilden die parallelen Längsseiten und die Querseite des Gehäuses auch einen Rahmen, nämlich einen Gehäuserahmen. Dieser Gehäuserahmen wird dann vom Rahmen des Unterbaus umschlossen. Dadurch kann das kassettenartige Gehäuse im Rahmen des Unterbaus durch Einsetzen von oben oder insbesondere durch Einschieben von der Türseite des Fahrzeugs her montiert und demontiert werden. im letztgenannten Falle, wenn das Gehäuse mit der darin angeordneten Rampe in den Rahmen des Unterbaus eingeschoben wird, sind zueinandergerichteten Flächen, insbesondere Längsflächen des Rahmens des Unterbaus einerseits und des Gehäuserahmens andererseits, Führungsmittel zugeordnet, die vorzugsweise schienenartig ausgebildet sind, und zwar als längliche Vorsprünge mit dazu korre-spondierenden nutartigen Vertiefungen.

Es ist weiterhin vorgesehen, eine obere Deckwandung des kassettenartigen Gehäuses in der Ebene der Flurfläche anzuordnen. Die Deckwandung des Gehäuses bildet dann im Bereich des Ausschnitts für das Gehäuse und die Rampe die Flurfläche, so dass diese auch im Türbereich, das heißt im Bereich des Ausschnitts, eine übergangslose, durchgehende Flurfläche bildet. Die Deckwandung des kassettenartigen Gehäuses erstreckt sich dann über den gesamten Ausschnitt der Flurfläche im Türbereich des Fahrzeugs.

Bei der im kassettenartigen Gehäuse untergebrachten Rampe erstreckt sich der durch eine Erniedrigung des Querschnitts tiefergelegte Längsholm oder insbesondere der Stützholm beim im Bereich des Gehäuses ganz entfernten Längsholm unter dem Gehäuse entlang, und zwar vorzugsweise unter der zur Tür weisenden Stirnseite des Gehäuses. Dadurch ist im Türbereich der Längsholm bzw. der Stützholm etwa U-förmig unten um das Gehäuse herumgeführt. Hierbei kann der Stützholm oder der bestehen bleibende untere Teil des Längsholms als tragendes Auflager für das zur Außenseite des Fahrzeugs weisende Ende des Gehäuses dienen. Vorzugsweise ist das Gehäuse auf dem tiefergelegten Längsholmabschnitt mit seinem nach außen weisenden Endbereich befestigt.

Es ist bevorzugt vorgesehen, die gegenüberliegenden Enden des Längsholms mit den auf beiden Seiten neben der Rampe liegenden Enden mit dem Stützholm zu verbinden. Dieses erfolgt derart, dass der Stützholm unter dem im Türbereich unterbrochenen Längsholm angeordnet ist und dabei die durch die Unterbrechung des Längsholms im Bereich der Rampe entstehenden getrennten Längsholmteile verbunden sind. Dadurch verliert der Längsholm nicht an Festigkeit und behält seine ihm statisch zugedachte Funktion bei, und das obwohl der Längsholm durch den Stützholm im Türbereich nach unten versetzt unter der Rampe hindurchgeführt ist. Dabei kann der Stützholm als Auflager und zur Befestigung von Mitteln zum Ein- und Ausfahren der Rampe dienen.

Bevorzugte Ausführungsbeispiele der Erfindung werden nachfolgend anhand der Zeichnung näher erläutert. In dieser zeigen:
- Fig. 1: eine perspektivische Ansicht eines Teils des Fahrzeugs, nämlich einen Tür- bereich mit einer Ein- und Ausstiegshilfe im eingefahrenen Zustand,
- Fig. 2: eine Ansicht analog zur Fig. 1 mit einer ausgefahrenen Rampe der Ein- und Ausstiegshilfe,
- Fig. 3: einen Querschnitt durch den Türbereich des Fahrzeugs, und
- Fig. 4: ein alternatives Ausführungsbeispiel der Erfindung in einer Ansicht analog zur Fig.1.

Die Figuren zeigen einen Teil eines Fahrzeugs, beispielsweise einer Straßenbahn, eines Zugs oder eines Omnibusses, und zwar nur einen Türbereich 10 desselben. Das Fahrzeug weist mindestens in diesem Türbereich 10 eine Ein- und Ausstiegshilfe für mobilitätsbehinderte Personen, insbesondere Rollstuhlfahrer, auf. Bei dieser Ein- und Ausstiegshilfe handelt es sich um eine solche, die über eine Rampe 11 verfügt, die im Betriebszustand dazu dient, den Abstand und eventuell einen Höhenunterschied zwischen einer Flurfläche 12 des Fahrzeugs und einem Bodenbelag, beispielsweise einen vorzugsweise gegenüber der Fahrbahn höheren Gehweg, einem Bahnsteig einer Haltestelle oder einer sonstigen Verkehrsfläche zu überbrücken. Dazu verläuft die ausgefahrene Rampe 11 leicht schräggerichet, wobei die Neigung der Rampe 11 in Abhängigkeit vom Höhenunterschied zwischen der in den Figuren nicht gezeigten Fahrbahn für das Fahrzeug und den Gehweg 13 mehr oder weniger groß ist.

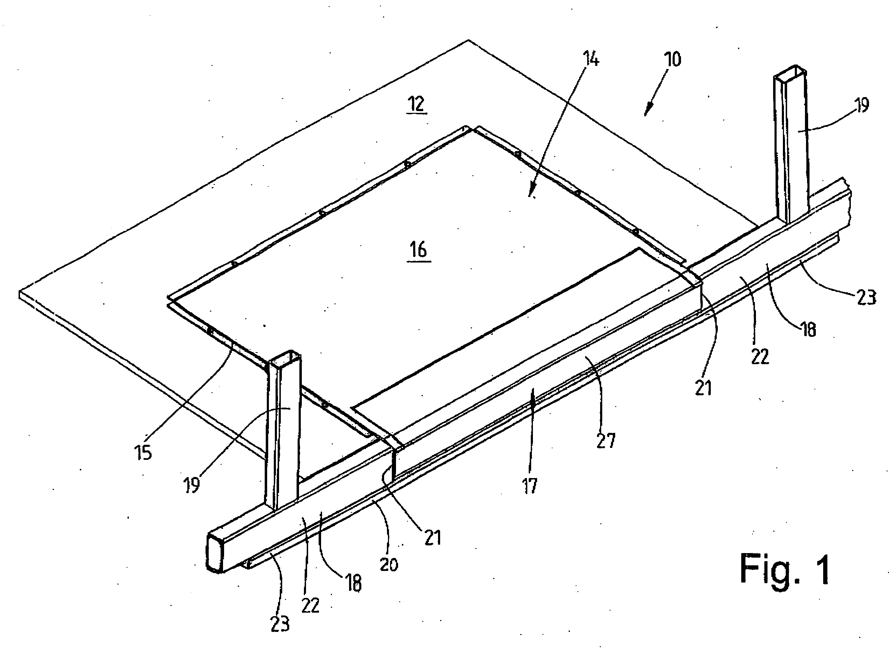

Die Einstiegs- und Ausstiegshilfe verfügt neben der vorzugsweise rechteckigen, ebenen Rampe 11 über ein kassettenartiges Gehäuse 14. Die Rampe 11 ist bei Nichtgebrauch der Einstiegs- und Ausstiegshilfe vorzugsweise vollständig in das Gehäuse 14 einfahrbar. Dann dient das Gehäuse 14 zur Unterbringung der Rampe 11. Zum Gebrauch ist die Rampe 11 aus dem Gehäuse 14 herausfahrbar. Die Rampe 11 überbrückt dabei den Abstand zwischen dem Fahrzeug und dem Gehweg 13. Durch entsprechende Schrägstellung der Rampe 11 gleicht diese auch Höhenunterschiede zwischen der Flurfläche 12 des Fahrzeugs auf dem Gehweg 13 aus. Das kastenförmige Gehäuse 14 ist im Türbereich 10 des Fahrzeugs befestigt. Zu diesem Zweck verfügt die Flurfläche 12 im Türbereich 10 über einen rechteckigen Ausschnitt, der mindestens den Außenabmessungen des Gehäuses 14 entspricht. In diesen Ausschnitt 15 ist das Gehäuse 14 mit der Rampe 11 von oben einsetzbar oder von außen einschiebbar, und zwar bündig. Auf diese Weise liegt eine obere Deckfläche 16 des Gehäuses 14 in der Ebene der Flurfläche 12. Dabei bildet die Deckfläche 16 des Gehäuses 14 den durch den Ausschnitt 15 entfernten Teil der Flurfläche 12. Durch die bündige Anordnung der Deckfläche 16 zur Flurfläche 12 ist der Ausschnitt 15 von der Deckfläche 16 nahezu übergangslos zu den angrenzenden Teilen der Flurfläche 12 abgedeckt (Fig. 1).

Die Flurfläche 12 ist auf einem Unterbau des Fahrzeugs befestigt. Von diesem Unterbau ist in den Figuren nur ein Teil eines äußeren Längsholms 18 an der Seite des Türbereichs 10 des Fahrzeugs gezeigt. Der Längsholm 18 ist mit senkrechten Streben 19 verbunden. Zwei an gegenüberliegenden Seiten des Türbereichs 10 liegende Streben 19 sind in den Figuren teilweise dargestellt. Der Längsholm 18 und die Streben 19 sind vorzugsweise aus Vierkantrohren mit einem rechteckigen Querschnitt gebildet. Außenseitig vor dem Längsholm 18 und den Streben 19 ist eine nicht gezeigte Seitenwandverkleidung des Fahrzeugs befestigt.

Der Längsholm 18 kann im Türbereich 10, nämlich dort, wo sich das Gehäuse 14 mit der Rampe 11 befindet, tiefergelegt sein. Dazu ist aus dem Längsholm 18 beim Ausführungsbeispiel der Fig. 1 bis 3 im Türbereich 10 ein Stück entfernt, und zwar herausgetrennt. Das entfernte Stück des Längsholms 18 entspricht der Breite des Gehäuses 14 der Rampe 11. Der Längsholm 10 ist durch das Entfernen eines Stücks desselben geteilt in zwei Längsholmteile auf entgegengesetzten Seiten des Gehäuses 14 für die Rampe 11. Um die Tragfähigkeit des Längsholms 18 trotz des Auftrennens desselben und der Entfernung eines Stücks des Längsholms 18 wieder herzustellen, ist im Türbereich 10 unter dem Längsholm 18 ein längsgerichteter Stützholm 20 angeordnet, der die Längsholmtelle verbindet. Der Stützholm 20 erstreckt sich unter das Gehäuse 14 hindurch über den gesamten aus dem Längsholm 18 im Türbereich 10 entfernten Bereich und darüber hinaus über auf beiden Seiten des Gehäuses 14 anschließende kurze Endbereiche 21 des Längsholms 18 bzw. der Längsholmteile.

Von gegenüberliegenden Enden 21 des Längsholms 18 auf beiden Seiten des Gehäuses 14 liegende Endbereiche 21 des Längsholms 18 bzw. der Längsholmteile sind so von gegenüberliegenden Endbereichen 23 des Stützholms 20 überlappt. An den überlappenden Endbereichen 22 und 23 ist der Stützholm 20 mit dem aufgetrennten Längsholm18, und zwar unterschiedlichen Längsholmteilen desselben, verbunden. Vorzugsweise erfolgt die Verbindung des Stützholms 20 mit dem Längsholm 18 in den Endbereichen 22 und 23 durch Schweißen. Der Stützholm 20 ist wie der Längsholm 18 aus einem Vierkantrohr mit vorzugsweise rechteckigem Querschnitt gebildet. Die Höhe des Stützholms 20 ist aber geringer als die Höhe des Längsholms 18, wodurch der Stützholm 20 die Bodenfreiheit des Fahrzeugs nicht nennenswert beeinträchtigt. Aus Festigkeits-und Stabilitätsgründen kann es vorgesehen sein, den Stützholm 20 mit einer größeren Wandstärke zu versehen als den Längsholm 18. Auch ist es denkbar, an einer zum Fahrzeuginneren weisende Seite dem Längsholm 18 und dem Stützholm 20 Knotenbleche zuzuordnen, die beide Holme überdecken und hiermit verschweißt sind.

Durch den im Bereich des Ausschnitts 15 für das Gehäuse 14 der Rampe 11 entfernten Teil des Längsholms 18 und den an dieser Stelle vorgesehenen Stützholm 20 ist der Längsholm 18 mit dem Stützholm 20 in einer etwa vertikalen Ebene unten um eine zur Seitenwandung des Fahrzeugs weisende schmale Stirnseite 17 des Gehäuses 14 etwa U-förmig herumgeführt. Das Gehäuse 14 mit der Rampe 11 liegt dadurch zwischen den Enden 21 der durch Auftrennen des Längsholms 18 entstandenen Längsholmabschnitte. Dadurch ist es möglich, die Stirnseite 17 des Gehäuses 14 für die Rampe 11 etwa bündig mit der Außenfläche des Längsholms 18 und den sich unter das Gehäuse 14 hindurch erstreckenden Stützholm 20 abschließen zu lassen. Gleichzeitig ist es möglich, das Gehäuse 14 zwischen den gegenüberliegenden Enden 21 des Längsholms 18 auf dem Stützholm 20 aufliegen zu lassen und hier zu befestigen, vorzugsweise auf dem Stützholm 20.

Der aufgetrennte Längsholm 18 kann um das Gehäuse 14 der Rampe 11 herumgeführt sein. In diesem Falle ist das Gehäuse 14 an den parallelen Längsseiten und der hinteren Querseite von einem Rahmen umgeben, der an den gegenüberliegenden Enden der Längsholmabschnitte befestigt ist. Üblicherweise verfügt auch das kassettenartige Gehäuse 14 an den parallelen Längsseiten und der hinteren Querseite über einen Gehäuserahmen, so dass der Gehäuserahmen vom Rahmen des Unterbaus umgeben wird.

Der um das Gehäuse 14 herumgeführte Rahmen des Unterbaus ermöglicht es, das Gehäuse 14 mit der Rampe 11 als Einschub auszubilden. Dazu sind den gegenüberliegenden Längsseiten sowohl des Gehäuserahmens als auch des Rahmens des Unterbaus Längsführungen zugeordnet. Vorzugsweise handelt es sich hierbei um korrespondierende Nuten und Führungsschienen. Beispielsweise weist der Rahmen Längsnuten auf, in die außen vorstehende Führungsschienen in Längswandungen des Gehäuserahmens eingreifen. Auf diese Weise ist die gesamte Ein- und Ausstiegshilfe, also das Gehäuse 14 mit der Rampe 11, in den Ausschnitt 15 im Türbereich 10 des Fahrzeugs einschiebbar und bei Bedarf herausziehbar.

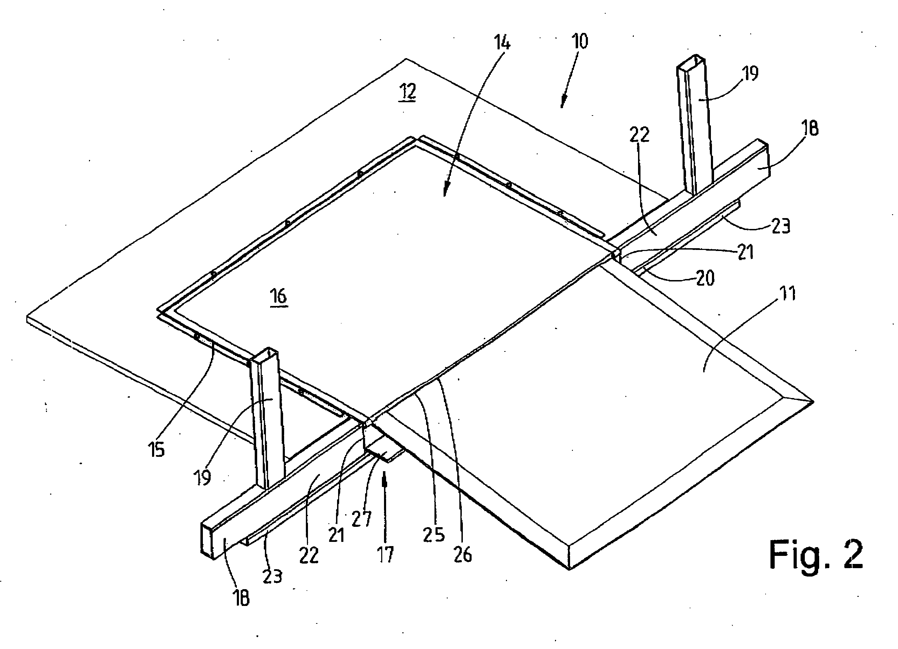

Durch die bündige Anordnung der Deckfläche 16 des Gehäuses 14 mit der Rampe 11 im Ausschnitt 15 der Flurfläche 12 sowie den im Bereich des Gehäuses 14 entfernten Abschnitt des Längsholms 18 befindet sich die Rampe 11 dicht unterhalb der Flurfläche 12. Die Folge ist, dass bei ausgefahrener Rampe 11 (Fig. 2) eine zur Stirnseite 17 des Gehäuses 14 weisende Querkante 25 der Rampe 11 etwa auf dem Niveau der Ebene der Deckfläche 16 und somit gleichzeitig auf dem Niveau der Flurfläche 12 sich befindet. Es entsteht so bei ausgefahrener Rampe 11 kein nennenswerter Absatz zwischen der Querkante 25 der Rampe 11 und der zur Stirnseite 17 des Gehäuses 14 weisenden benachbarten Querkante 26 der Deckfläche 16. Auf diese Weise ist beim erfindungsgemäßen Fahrzeug keine Flurkantenanpassung der Rampe 11 erforderlich, indem - wie beim Stand der Technik üblich - die Querkante 25 der Rampe 11 durch entsprechende Mechaniken nach dem Herausfahren der Rampe 11 aus dem Gehäuse 14 angehoben werden muss auf das Niveau der Flurfläche 12.

Gegebenenfalls kann zum Ausgleich eines geringen Höhenversatzes der Querkante 25 der Rampe 11 zur Querkante 26 der Deckfläche 16 des Gehäuses 14 infolge der dicht unterhalb der Deckfläche 16 des Gehäuses 14 liegenden Rampe 11 die in Längsrichtung des Fahrzeugs verlaufende Kippachse der Rampe 14, um diese zur Anpassung an das niedrigere Niveau des Gehwegs leicht schräg stellen zu können, von der Querkante 25 etwas entfernt angeordnet sein. Durch diese besondere Anordnung der Kippachse mit Abstand von der Querkante 25 der Rampe 11 wird bei der Schrägstellung der Rampe 11 auch der geringe Höhenversatz durch die etwas unterhalb der Deckfläche 16 liegende Rampe 11 ausgeglichen, und zwar ohne dass dazu eine aufwendige Mechanik zur Flurkantenanpassung erforderlich wäre.

Die Stirnseite 17 des Gehäuses 14 ist durch eine Klappe 27 verschließbar. Die Klappe 27 ist am unteren Rand schwenkbar, beispielsweise durch ein Scharnier, an der Unterseite des Gehäuses 14 angelenkt. Zum Ausfahren der Rampe 11 wird die Klappe 27 nach vorn verschwenkt (Fig. 2), wodurch sie eine stirnseitige Öffnung des Gehäuses 14 freigibt, durch die die Rampe 11 aus dem Gehäuse 14 herausfahrbar ist.

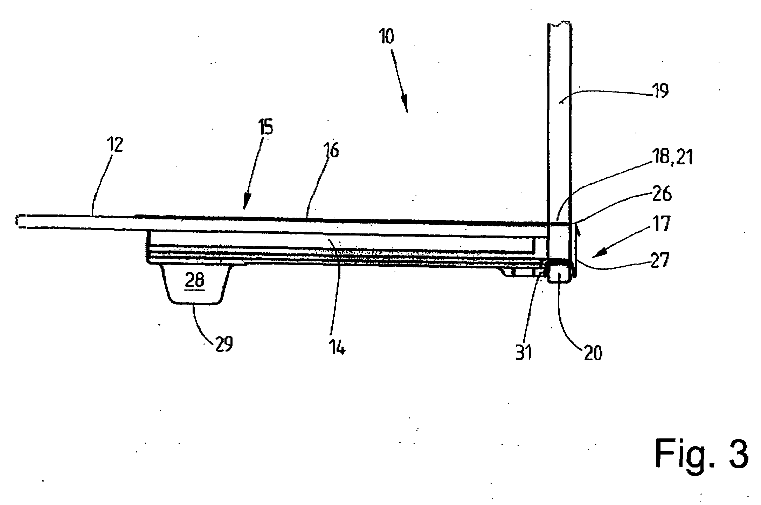

Die Rampe 11 kann manuell oder auch automatisch aus dem Gehäuse 14 heraus- und in das Gehäuse 14 einfahrbar sein. Zum automatischen Ein- und Ausfahren der Rampe 11 ist ein Antrieb 28 vorgesehen, der größtenteils oder soweit erforderlich im zur Fahrzeugmitte weisenden hinteren Teil unter dem Gehäuse 14 angeordnet ist (Fig. 3). Der Antrieb 28 ist geschützt in einer raumsparenden Abdeckung 29 unter dem Gehäuse 14 angeordnet. Die Tiefe der Abdeckung 29 ist vorzugsweise so gewählt, dass diese nicht nennenswert unter dem Niveau der Unterseite des Stützholms 20 liegt (Fig. 3), wodurch die Bodenfreiheit des Fahrzeugs nicht wesentlich beeinträchtigt wird. Der Antrieb kann elektrisch, pneumatisch, hydraulisch oder mechanisch (Seiltrieb oder dergleichen) erfolgen.

Der zur Stirnseite 17 weisende Querrand des kassettenartigen Gehäuses 14 weist einen durchgehenden Träger 31 auf. Der Träger 31 ist mit einem U-förmigen Profil versehen. Die Unterseite dieses Trägers 31 ist offen. Der Träger 31 ist so bemessen, dass seine Innenmaße etwas größer sind als die Breite des Stützholms 20 unter dem im Türbereich 10 aufgetrennten Längsholm 18. Auf diese Weise kann der Träger 31 an der vorderen Querkante des Gehäuses 14 auf den Stützholm 20 aufgelegt werden und diesen im oberen Bereich umgeben bzw. umgreifen. Dadurch ist der Stützholm 20 mindestens teilweise, vorzugsweise vollständig, im Träger 31 vor dem Gehäuse 14 zur Aufnahme der Rampe 11 einsetzbar. Es kommt so zu keiner nennenswerten Erhöhung im Bereich des Stützholms 20, so dass das mit dem unten offenen U-förmigen Träger 31 versehene Gehäuse 14 platzsparend auf dem Stützholm 20 abgestützt werden kann.

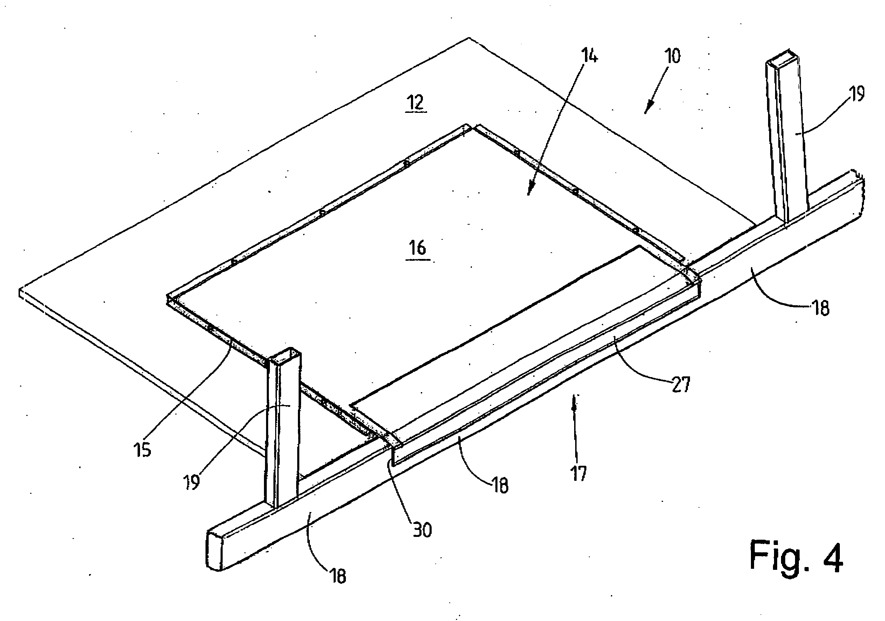

Die Fig. 4 zeigt ein alternatives Ausführungsbeispiel der Erfindung. Dieses unterscheidet sich vom Ausführungsbeispiel der Fig. 1 bis 3 nur dadurch, dass der Längsholm 18 auf eine andere Weise tiefergelegt ist. Im Übrigen sind beide Ausführungsbeispiele gleich, weswegen für gleiche Teile gleiche Bezugsziffern verwendet werden.

Beim in der Fig. 4 gezeigten Ausführungsbeispiel ist der Längsholm 18 im Türbereich 10, also im Bereich des Gehäuses 14 der Rampe 11, mit einem veränderten Querschnitt versehen. Dazu kann im Türbereich 10 der Längsholm 18 tiefergelegt sein, indem sein Quer-schnitt in der Höhe reduziert ist. Im Grunde genommen weist dazu der Längsholm 18 einen von der oberen Flurfläche 12 ausgehenden Ausschnitt 30 auf, der sich über die Breite des Gehäuses 14 erstreckt. Die Tiefe des Ausschnitts 30 richtet sich nach der Bauhöhe der Rampe 11 bzw. des Gehäuses 14. In der Regel erstreckt sich der Ausschnitt 30 über die halbe Höhe des Längsholms 18, kann aber auch noch tiefer liegen. Durch den Ausschnitt 30 ist der Längsholm 18 im Türbereich 10 nicht vollständig unterbrochen, sondern nur im Querschnitt reduziert. Dadurch erübrigt sich im Bereich des Ausschnitts 30 ein Stützholm 20 unter dem Längsholm 18. Gegebenenfalls kann aber zusätzlich ein Stützholm 20 vorgesehen sein. Ebenfalls ist es denkbar, dass um das Gehäuse 14, nämlich die paralleles Längsseiten und die hintere Querseite, ein Rahmen herumgeführt ist, der an gegenüberiiegerideii Seiten des Ausschnitts 30 mit dem Längsholm 18 verbunden ist.

Beim Ausführungsbeispiel der Fig. 4 übergreift der U-förmige Träger 31 den stehen bleibenden unteren Teil des Längsholms 18, wodurch auch eine raumsparende Abstützung des Gehäuses 14 zur Aufnahme der Rampe 11 auf dem Längsholm 18 zustande kommt.

## Patentansprüche

1. Fahrzeug mit einer Rampe (11) zum Erleichtern des Ein- und Ausstiegs mobilitätsbehinderter Personen, das eine Flurfläche (12), einen diese tragenden Unterbau mit einem Längsholm (18) und in mindestens einem Türbereich (10) einen Ausschnitt (15) in der Flurfläche (12) zur Aufnahme mindestens einer in der Ebene oder dicht unterhalb der Ebene der Flurfläche (12) in einem kassettenartigen Gehäuse (14) angeordneten Rampe (11) aufweist, **dadurch gekennzeichnet, dass** das Gehäuse (14) an einer zum Längsholm (18) weisenden Stirnseite mit einem im Querschnitt ein U-förmiges Profil aufweisenden Träger (31) versehen ist, dessen Unterseite offen ist, wobei das Profil des Trägers (31) so bemessen ist, dass der Träger (31) mindestens einen oberen Teil des Längsholms (18) oder einen Stützholm (20) zur Verstärkung des im Türbereich (10) entfernten Längsholms (18) übergreift.

2. Fahrzeug Anspruch 1, **dadurch gekennzeichnet, dass** der Längsholm (18) im Bereich des kassettenartigen Gehäuses (14) um dieses herumgeführt ist, insbesondere das kassettenartige Gehäuse (14) von einem Rahmen umgeben ist, der mit dem Längsholm (18) verbunden ist zur Bildung eines Teils des tragenden Unterbaus der Flurfläche (12).

3. Fahrzeug nach Anspruch 1 oder 2, **dadurch gekennzeichnet, dass** der Rahmen den Ausschnitt (15) der Flurfläche (12) im Türbereich (10) umgibt, insbesondere im Bereich des entfernten oder im Querschnitt verringerten, insbesondere tiefergelegten, Längsholms (18) angeordnet ist,

4. Fahrzeug nach einem der vorhergehenden Ansprüche, **dadurch gekennzeichnet, dass** eine obere Deckfläche (16) des Gehäuses (14) etwa in der Ebene der Flurfläche (12) liegt, wobei vorzugsweise die Deckfläche (16) sich über den Bereich des Ausschnitts (15) in der Flurfläche (12) erstreckt zur Bildung eines den Türbereich (10) umfassenden Teil der Flurfläche (12).

5. Fahrzeug nach einem der vorhergehenden Ansprüche, **dadurch gekennzeichnet, dass** das Gehäuse (14) zwischen Enden der durch das Entfernen eines im Bereich des Gehäuses (14) liegenden Teils des Längsholms (18) gebildeten Längsholmteile oder im Bereich des durch einen Ausschnitt (30) zur Verringerung seiner Höhe teilweise entfernten Längsholms (18) angeordnet ist.

6. Fahrzeug nach einem der vorhergehenden Ansprüche, **dadurch gekennzeichnet, dass** der Stützholm (20) sich unter dem kassettenartigen Gehäuse (14) entlang erstreckt, vorzugsweise unter einer zur Tür weisenden Stirnseite (17) des Gehäuses (14).

7. Fahrzeug nach einem der vorhergehenden Ansprüche, **dadurch gekennzeichnet, dass** gegenüberliegende Endbereiche (22) des Längsholms (18) mit gegenüberliegenden Endbereichen (23) des Stützholms (20) überlappen und im Bereich dieser Überlappungen die Endbereiche (22) des Längsholms (18) mit den Endbereichen (23) des Stützholms (20) vorzugsweise starr verbunden sind, insbesondere durch Schweißen.

8. Fahrzeug nach einem der vorhergehenden Ansprüche, **dadurch gekennzeichnet, dass** der Stützholm (20) derart bemessen und mit Endbereichen (22) des Längsholms (18) verbunden ist, dass die tragenden Eigenschaften des im Türbereich (10) entfernten Abschnitts des Längsholms (18) nicht oder zumindest nicht nennenswert beeinträchtigt sind.

## Claims

1. Vehicle with a ramp (11) for facilitating disabled people to enter and exit the vehicle, the vehicle having a floor surface (12), a substructure which supports the latter with a longitudinal bar (18) and, in at least one door region (10), a cutout (15) in the floor surface (12) for receiving at least one ramp (11) arranged in a cassette-like housing (14) in the plane or just below the plane of the floor surface (12), **characterized in that** an end side of the housing (14) facing the longitudinal bar (18) is provided with a support (31) which has a U-shaped profile in cross section and the lower side of which is open, the profile of the support (31) being dimensioned in such a manner that the support (31) engages at least over an upper part of the longitudinal bar (18) or over a supporting bar (20) in order to reinforce the longitudinal bar (18) which is removed in the door region (10).

2. Vehicle according to Claim 1, **characterized in that** the longitudinal bar (18), in the region of the cassette-like housing (14), is guided around the latter, and in particular the cassette-like housing (14) is surrounded by a frame which is connected to the longitudinal bar (18) in order to form part of the supporting substructure of the floor surface (12).

3. Vehicle according to Claim 1 or 2, **characterized in that** the frame surrounds the cutout (15) of the floor surface (12) in the door region (10), and in particular is arranged in the region of the longitudinal bar (18) which is removed or is reduced in cross section and in particular is positioned lower.

4. Vehicle according to one of the preceding claims, **characterized in that** an upper cover surface (16) of the housing (14) lies approximately in the plane of the floor surface (12), the cover surface (16) preferably extending over the region of the cutout (15) in the floor surface (12) in order to form a part of the floor surface (12) surrounding the door region (10).

5. Vehicle according to one of the preceding claims, **characterized in that** the housing (14) is arranged between ends of the longitudinal bar parts, which are formed by removal of a part of the longitudinal bar (18) located in the region of the housing (14), or in the region of the longitudinal bar (18) which is partially removed by means of a cutout (30) in order to reduce the height of said bar.

6. Vehicle according to one of the preceding claims, **characterized in that** the supporting bar (20) extends along below the cassette-like housing (14) and preferably below an end side (17) of the housing (14), which side faces the door.

7. Vehicle according to one of the preceding claims, **characterized in that** opposite end regions (22) of the longitudinal bar (18) overlap with opposite end regions (23) of the supporting bar (20) and, in the region of said overlaps, the end regions (22) of the longitudinal bar (18) are connected, preferably rigidly, in particular by welding, to the end regions (23) of the supporting bar (20).

8. Vehicle according to one of the preceding claims, **characterized in that** the supporting bar (20) is dimensioned and connected to end regions (22) of the longitudinal bar (18) in such a manner that the supporting characteristics of that section of the longitudinal bar (18) which is removed in the door region (10) are not or at least are not significantly impaired.

## Revendications

1. Véhicule équipé d'une rampe (11) pour faciliter la montée et la descente de personnes à mobilité réduite, avec une surface de plancher (12), une sous-caisse la supportant équipée d'un longeron (18) et, dans au moins une zone de porte (10), une découpe (15) réalisée dans la surface de plancher (12) prévue pour loger au moins une rampe (11) disposée dans le plan ou, de façon étanche, en dessous du plan de la surface de plancher (12), dans un boîtier (14) de type cassette, **caractérisé en ce que** le boîtier (14) est pourvu, au niveau d'un côté avant orienté vers le longeron (18), d'un support (31) comportant un profilé en U en section transversale dont le côté inférieur est ouvert, le profilé du support (31) étant dimensionné de telle sorte que le support (31) agrippe au moins une partie supérieure du longeron (18) ou une barre d'appui (20) par le haut pour renforcer le longeron (18) supprimé dans la zone de porte (10).

2. Véhicule selon la revendication 1, **caractérisé en ce que** le longeron (18) est guidé autour du boîtier dans la zone du boîtier (14) de type cassette, le boîtier (14) de type cassette étant notamment entouré par un cadre relié au longeron (18) pour former une partie de la sous-caisse portante de la surface de plancher (12).

3. Véhicule selon la revendication 1 ou 2, **caractérisé en ce que** le cadre entoure la découpe (15) de la surface de plancher (12) dans la zone de porte (10), celui-ci étant notamment disposé dans la zone du longeron (18) supprimé ou réduit dans sa section transversale, notamment placé plus profondément.

4. Véhicule selon l'une quelconque des revendications précédentes, **caractérisé en ce qu'**une surface de plancher (16) supérieure du boîtier (14) repose approximativement dans le plan de la surface de plancher (12), la surface de plancher (16) s'étendant de préférence au-delà de la zone de la découpe (15) réalisée dans la surface de plancher (12) pour former une partie de la surface de plancher (12) comprenant la zone de porte (10).

5. Véhicule selon l'une quelconque des revendications précédentes, **caractérisé en ce que** le boîtier (14) est disposé entre les extrémités des parties de longeron formées en retirant une partie du longeron (18) reposant dans la zone du boîtier (14) ou dans la zone du longeron (18) en partie supprimé, pour réduire sa hauteur du fait de la présence d'une découpe (30).

6. Véhicule selon l'une quelconque des revendications précédentes, **caractérisé en ce que** la barre d'appui (20) s'étend en dessous du boîtier de type cassette (14) en le longeant, de préférence en dessous d'un côté avant (17) du boîtier (14) orienté vers la porte.

7. Véhicule selon l'une quelconque des revendications précédentes, **caractérisé en ce que** les zones d'extrémité (22) opposées du longeron (18) chevauchent les zones d'extrémité (23) opposées de la barre d'appui (20) et relient, de préférence de façon rigide, les zones d'extrémité (22) du longeron (18) aux zones d'extrémité (23) de la barre d'appui (20), notamment par soudage, dans la zone de ces chevauchements.

8. Véhicule selon l'une quelconque des revendications précédentes, **caractérisé en ce que** la barre d'appui (20) est dimensionnée et reliée aux zones d'extrémité (22) du longeron (18) de telle sorte que cela ne porte pas atteinte aux propriétés de portance de la section du longeron (18) supprimé dans la zone de porte (10), tout du moins pas significativement.
